# EUROPÄISCHE PATENTSCHRIFT

(11) **EP 3 687 936 B1**
(45) Veröffentlichungstag und Bekanntmachung des Hinweises auf die Patenterteilung: **13.09.2023**
(21) Anmeldenummer: 18781954.5
(22) Anmeldetag: 25.09.2018
(51) Int. Cl.: B66C 13/40, B66C 23/68

(54) **BEDIENVORRICHTUNG UND LADEKRAN MIT EINER BEDIENVORRICHTUNG**
OPERATING DEVICE AND LOADING CRANE HAVING AN OPERATING DEVICE
DISPOSITIF DE COMMANDE UTILISATEUR ET GRUE DE CHARGEMENT COMPRENANT UN DISPOSITIF DE COMMANDE UTILISATEUR

(30) Priorität: 26.09.2017 AT 5017817 U
(43) Veröffentlichungstag der Anmeldung: 05.08.2020
(73) Patentinhaber: Palfinger AG, 5101 Bergheim (AT)
(72) Erfinder: BERGMAYR, Benjamin, 1020 Wien (AT); HANDLECHNER, Paul, 5163 Mattsee (AT); REISCHAUER, Richard, 5231 Schalchen (AT)
(74) Vertreter: Torggler & Hofmann Patentanwälte - Innsbruck
(86) Internationale Anmeldenummer: PCT/AT2018/060224
(87) Internationale Veröffentlichungsnummer: WO 2019/060937

(56) Entgegenhaltungen:
- WO-A1-2017/032922
- US-A1- 2015 161 872

## Beschreibung

Die Erfindung betrifft eine Bedienvorrichtung für einen Ladekran mit den Merkmalen des Oberbegriffs des Anspruchs 1 und einen Ladekran mit einer solchen Bedienvorrichtung.

Eine gattungsgemäße Bedienvorrichtung, wie beispielsweise aus der WO 2017/032922 A1 bekannt ist, ist seit langem bei Ladekranen im Einsatz.

Problematisch ist daran, dass Ladekrane ein sehr dynamisches Einsatzfeld aufweisen, was Einsätze schwer planbar macht. Deshalb müssen sicherheitsrelevante Entscheidungen vom Benutzer des Krans während des Einsatzes vor Ort getroffen werden. Häufig ist der Arbeitsbereich schwer einsehbar, was dazu führt, dass der Benutzer seine Position verändern muss. Der Benutzer muss oft seinen Blick von der zu kranenden Last abwenden, um auf die Bedienvorrichtung zu blicken. Oftmals ist sich der Benutzer im Unklaren über die aktuell vorliegenden Betriebsparameter des Krans. Soll dem Benutzer Klarheit über die aktuell vorliegenden Betriebsparameter des Krans geschaffen werden, stellt sich zudem die Frage, wie diese aufbereitet und dem Benutzer vermittelt werden.

Aufgabe der Erfindung ist die Bereitstellung einer gattungsgemäßen Bedienvorrichtung und eines Ladekrans, bei welchen die oben diskutierten Probleme vermieden werden. Diese Aufgabe wird durch eine Bedienvorrichtung mit den Merkmalen des Anspruchs 1 und einen Ladekran mit einer solchen Bedienvorrichtung gelöst. Vorteilhafte Ausführungsformen der Erfindung sind in den abhängigen Ansprüchen definiert.

Wie eine gattungsgemäße Bedienvorrichtung für einen Ladekran weist auch die Bedienvorrichtung, welche bei der vorliegenden Erfindung zum Einsatz kommt, eine Kransteuerung zur Ansteuerung von Aktuatoren des Ladekrans und eine Eingabevorrichtung zur Eingabe von Steuerbefehlen für die Kransteuerung auf. Die Aktuatoren des Ladekrans werden dabei durch die Kransteuerung basierend auf den eingegebenen Steuerbefehlen angesteuert. Weiter ist die Kransteuerung zum Auswerten von Sensorsignalen von Sensoren des Ladekrans und zur Erzeugung von Sensordaten auf Basis der Sensorsignale ausgebildet. Weiter ist die Eingabevorrichtung von der Kransteuerung räumlich getrennt ausgebildet, wie dies beispielsweise bei einer Funkfernbedienung gegeben ist.

Die Kransteuerung weist eine erste Telekommunikationsvorrichtung zum Austausch von Datensignalen mit der Eingabevorrichtung auf, wobei die von der Kransteuerung abgegebenen Datensignale Sensordaten umfassen. Analog dazu weist die Eingabevorrichtung eine zweite Telekommunikationsvorrichtung zum Austausch von Datensignalen mit der ersten Telekommunikationsvorrichtung auf, wobei die von der Eingabevorrichtung abgegebenen Datensignale Steuerbefehle umfassen. Es können also von der Kransteuerung und der Eingabevorrichtung (unter anderem) Datensignale in Form von Sensordaten und Steuerbefehlen ausgetauscht werden.

Gemäß der Erfindung ist nun weiter vorgesehen, dass die Bedienvorrichtung eine von der Eingabevorrichtung räumlich getrennte und von einem Benutzer am Körper tragbare Signalisierungsvorrichtung aufweist. Dabei ist vorgesehen, dass die Eingabevorrichtung eine Sendevorrichtung zur Abgabe von Datensignalen aufweist, welche von einer Empfangsvorrichtung der Signalisierungsvorrichtung empfangen werden können. Weiter ist vorgesehen, dass die von einem Benutzer am Körper tragbare Signalisierungsvorrichtung eine Anzeigevorrichtung aufweist, durch welche Audiodaten und/oder Bilddaten anzeigbar sind, wobei die Signalisierungsvorrichtung die Audiodaten und/oder Bilddaten einem Benutzer signalisiert.

Die dargestellten Audiodaten und/oder Bilddaten können Informationen über die aktuell vorliegenden Betriebsparameter des Ladekrans und gegebenenfalls der Bedienvorrichtung selbst, Informationen über einen geplanten, einen aktuell durchgeführten oder einen durchzuführenden Arbeitsvorgang oder Hebevorgang des Ladekrans, Informationen über das Umfeld des Krans und/oder des Benutzers oder Informationen zur Unterstützung von Reparatur- und/oder Wartungsarbeiten am Ladekran umfassen. Durch die Darstellung Audiodaten und/oder Bilddaten kann die Arbeitsbelastung für einen Benutzer verringert und die Bediensicherheit eines Ladekrans erhöht werden.

Die Audiodaten und/oder Bilddaten werden grundsätzlich (aber nicht notwendigerweise ausschließlich) auf Basis der Sensordaten erstellt, wobei zu deren Erstellung drei Varianten vorgesehen sind:
In einer ersten Variante umfassen die von der Kransteuerung an die Eingabevorrichtung abgegebenen Datensignale Sensordaten, und die Eingabevorrichtung gibt mittels der Sendevorrichtung diese Sensordaten an die Signalisierungsvorrichtung ab. Die Signalisierungsvorrichtung weist einen Prozessor auf, welcher nun auf Basis dieser Sensordaten die Audiodaten und/oder Bilddaten erzeugt.

In einer zweiten Variante weist die Eingabevorrichtung einen Prozessor auf, welcher auf Basis der von der Kransteuerung an die Eingabevorrichtung abgegebenen Sensordaten die Audiodaten und/oder Bilddaten erzeugt. Die Audiodaten und/oder Bilddaten werden nun mittels der Sendevorrichtung an die Signalisierungsvorrichtung abgegeben.

In einer dritten Variante ist vorgesehen, dass die Kransteuerung einen Prozessor aufweist, welcher auf Basis der Sensordaten Audiodaten und/oder Bilddaten erzeugt, und diese mittels der ersten und zweiten Telekommunikationsvorrichtungen an die Eingabevorrichtung abgibt und die Eingabevorrichtung mittels der Sendevorrichtung die Audiodaten und/oder Bilddaten an die Signalisierungsvorrichtung abgibt.

Die drei Varianten unterscheiden sich also im Wesentlichen darin, wo die Audiodaten und/oder Bilddaten, welche einem Benutzer mittels der Signalisierungsvorrichtung signalisiert werden, auf Basis der Sensordaten erzeugt werden.

Die Kransteuerung ist zur Ansteuerung von Aktuatoren des Ladekrans ausgebildet. Die Ansteuerung der Aktuatoren erfolgt auf Basis von Steuerbefehlen, wobei die Ansteuerung beispielsweise das Schalten von Ventilen (wie etwa eines Steuerschiebers) von hydraulischen Einrichtungen oder das Bestromen von elektrischen Einrichtungen umfassen kann.

Bei den Aktuatoren kann es sich allgemein um elektrische oder hydraulische Antriebe eines Ladekrans bzw. Fahrzeugkrans handeln, wie etwa um Hydraulikzylinder, elektrische oder hydraulische Antriebe von Winden, elektrische oder hydraulische Antriebe von Schwenkantrieben oder elektrische oder hydraulische Antriebe für bzw. von Arbeitsgeräten bzw. Anbaugeräten.

Durch die Eingabevorrichtung, welche räumlich von der Kransteuerung getrennt ausgebildet ist, können Steuerbefehle für die Kransteuerung eingegeben werden. Die Eingabe der Steuerbefehle kann beispielsweise durch einen Benutzer über ein Tastenfeld, Bedienknöpfe, Bedienhebel oder dergleichen erfolgen. Es soll dabei jedoch nicht ausgeschlossen sein, dass auch durch andere Vorrichtungen der Bedienvorrichtung Steuerbefehle für die Kransteuerung eingegeben werden können. Die Eingabevorrichtung kann beispielsweise in einem mobilen Bedienpult, wie etwa einer Funkfernsteuerung, oder in einem Bedienstand angeordnet sein. Das mobile Bedienpult, welches tragbar ausgebildet sein kann, sowie der Bedienstand, welcher am Ladekran und/oder an einem Fahrzeug mit einem Ladekran angeordnet sein kann, können drahtlos oder kabelgebunden mit der Kransteuerung kommunizieren. Die Eingabevorrichtung kann also als eine mobile Steuerung bzw. als ein mobiles Steuerungsmodul ausgebildet sein. Die Eingabevorrichtung kann als (zumindest ein) Teil einer eigenständigen (gegebenenfalls tragbaren) Bedieneinheit verstanden werden, mit welcher sich ein Benutzer im Wesentlichen frei in einem gewissen Umfeld um einen Ladekran bzw. eine hydraulische Hebevorrichtung bewegen kann.

Bei den Sensoren des Ladekrans kann es sich um Sensoren zur Erfassung des Zustands des Ladekrans sowie des Zustands von Anbaugeräten und dem Umfeld des Ladekrans handeln. Beispiele solcher Sensoren sind etwa Drucksensoren, Drehgeber, Winkelsensoren, Kraftmesszellen, optische Sensoren, Ultraschallsensoren, Näherungssensoren, akustische Sensoren, Temperatursensoren oder Beschleunigungssensoren. Von diesen Sensoren können jeweils Sensorsignale ausgehen, wie beispielsweise analoge und/oder digitale elektrische Signale. Die Kransteuerung ist dazu ausgebildet, aus den der Kransteuerung beispielsweise über kabelgebundene oder drahtlose Signalverbindungen zugeführten Sensorsignalen entsprechende Sensordaten zu erzeugen. So können beispielsweise von der Kransteuerung aus einer von einem Drucksensor ausgegebenen elektrischen Spannung Sensordaten, welche einem gemessenen Druck entsprechen, erzeugt werden. Bei der Erzeugung der Sensordaten können beispielsweise die Geometrie, Ausstattung und der Betriebszustand des Ladekrans einbezogen werden.

Datensignale, die zwischen der Kransteuerung und der Eingabevorrichtung ausgetauscht werden, können Sensordaten und Steuerbefehle umfassen.

Datensignale, die zwischen der Eingabevorrichtung und der Signalisierungsvorrichtung ausgetauscht werden, können Sensordaten umfassen, es soll jedoch nicht ausgeschlossen sein, dass diese Datensignale auch Steuerbefehle umfassen.

Bei einem Benutzer kann es sich um eine Person handeln, welche den Ladekran mittels Steuerbefehlen bedient. Dabei kann vorgesehen sein, dass der Ladekran auch von mehreren Benutzern bedient wird.

Es ist vorgesehen, dass die Signalisierungsvorrichtung von einem Benutzer am Körper tragbar ausgebildet ist, d.h. das zumindest ein Teil der Signalisierungsvorrichtung auf bzw. an einem Körperteil eines Benutzers anordenbar ist. Eine solche Signalisierungsvorrichtung kann dabei als Datenbrille, Smartwatch, Smartphone, Tablet, Headset, Ohrknopf und dergleichen ausgebildet sein.

Weiter ist vorgesehen, dass die Signalisierungsvorrichtung eine Anzeigevorrichtung aufweist, mittels welcher einem Benutzer Audiodaten und/oder Bilddaten angezeigt werden können. Durch die Anzeigevorrichtung können Bilddaten so wiedergegeben werden, dass sie von einem Benutzer optisch wahrnehmbar sind. Eine Anzeigevorrichtung für Bilddaten, also eine optische Anzeige, kann beispielsweise als optische Anzeige wie etwa ein zumindest teilweise opakes, halbdurchsichtiges oder durchsichtiges Display ausgebildet sein. Durch eine Anzeigevorrichtung für Audiodaten können Audiodaten so wiedergegeben werden, dass sie von einem Benutzer akustisch wahrnehmbar sind. Eine Anzeigevorrichtung für Audiodaten, also eine akustische Anzeige, kann beispielsweise als ein Schallwandler wie etwa ein Lautsprecher oder ein Knochenleitungshörer ausgebildet sein. Die Audiodaten und/oder Bilddaten können grundsätzlich Statusinformationen über den Betriebszustand des Ladekrans, Informationen zum Umfeld des Ladekrans und des Benutzers sowie akustische und/oder optische Warnhinweise umfassen.

Die Signalisierungsvorrichtung kann die Bilddaten zumindest einem Teil eines Sichtfelds des Benutzers überlagern oder zumindest einen Teil eines Sichtfelds des Benutzers mit den Bilddaten ausfüllen. Die Audiodaten und/oder Bilddaten können dem Benutzer angezeigt werden, ohne dass dieser seinen Blick vom momentanen Geschehen, also beispielsweise einem aktuell durchgeführten Arbeitsvorgang oder Hebevorgang, abwenden muss. Auch können dem Benutzer Audiodaten und/oder Bilddaten von Bereichen dargestellt werden, die außerhalb des Sichtfelds des Benutzers liegen.

Dabei kann vorteilhaft sein, dass die Signalisierungsvorrichtung die visualisierten Bilddaten nur einem Teil des Sichtfelds des Benutzers überlagert oder nur einen Teil des Sichtfelds des Benutzers mit den Bilddaten ausfüllt. Die Bilddaten werden also nicht dem gesamten Sichtfeld des Benutzers überlagert bzw. es wird nicht das gesamte Sichtfeld des Benutzers mit Bilddaten ausgefüllt. Bei einer entsprechend ausgebildeten Signalisierungsvorrichtung sieht der Benutzer also stets ein reelles Bild, welchem ein virtuelles Bild überlagert wird. Bei Verzögerungen in der Darstellung oder auch einem Ausfall des eingeblendeten bzw. überlagern Bildes (virtuelles Bild) hat der Benutzer stets noch das tatsächliche Geschehen (reelles Bild) im Sichtfeld.

Der Prozessor bzw. ein Prozessor der Kransteuerung, der Eingabevorrichtung oder der Signalisierungsvorrichtung ist dazu ausgebildet, Audiodaten und/oder Bilddaten auf Basis der Sensordaten zu erstellen. Der Prozessor kann dabei als ein eigenständiges Bauteil oder als eine datenverarbeitende Logik-Einheit (beispielsweise ein Prozessorkern) ausgebildet sein.

Die erste und die zweite Telekommunikationsvorrichtung können als drahtlose Telekommunikationsvorrichtungen, vorzugsweise als Kurzwellen-Telekommunikationsvorrichtungen, besonders bevorzugt als ISM-Telekommunikationsvorrichtungen, WIFI-Telekommunikationsvorrichtungen oder als Bluetooth-Telekommunikationsvorrichtungen, ausgebildet sein. Generell können die Sendevorrichtung und die Empfangsvorrichtung als drahtlose Telekommunikationsvorrichtungen oder als kabelgebundene Telekommunikationsvorrichtungen ausgebildet sein.

Es kann vorteilhaft sein, dass Sensordaten und Steuerbefehle über unterschiedliche Kommunikationskanäle oder über denselben Kommunikationskanal übermittelt werden. Es kann also vorgesehen sein, dass die Übermittlung bestimmter Datensignale über einen eigenen parallelen zweiten Übertragungskanal erfolgt. Dadurch können beispielsweise die Übertragung von Steuerbefehlen und die Übertragung von sonstigen Datensignalen getrennt voneinander erfolgen. So ist es auch möglich, unterschiedliche Kommunikationsstandards zu verwenden. So kann es möglich sein, für sicherheitsrelevante Datensignale, wie etwa Steuerbefehl, zertifizierte Hardware mit beispielsweise geeigneter Verschlüsselung, Frequenzspreizung oder Plausibilitätskontrolle zu verwenden, während für die Übertragung sonstiger Datensignale über eine einfachere und möglicherweise auch schnellere Verbindung, wie beispielsweise eine ISM-Funkverbindung, genutzt werden kann.

Vorteilhaft kann dabei sein, dass der Kommunikationskanal bzw. die Kommunikationskanäle verschlüsselt ist bzw. sind. Dadurch kann ein Abhören oder Beeinflussen der Übertragung der Datensignale verhindert bzw. erschwert werden. Die Anforderungen an die Verschlüsselung können sich dabei verschiedene Datensignale unterscheiden.

Es kann vorteilhaft sein, dass die Sendevorrichtung der Eingabevorrichtung durch die zweite Telekommunikationsvorrichtung gebildet wird.

Es kann allgemein von Vorteil sein, dass die Eingabevorrichtung einen Energiespeicher zur Energieversorgung der Signalisierungsvorrichtung aufweist. Die Energieversorgung, welche auch das Aufladen eines Energiespeichers der Signalisierungsvorrichtung umfassen kann, kann dabei kabelgebunden oder drahtlos (beispielsweise induktiv) erfolgen.

Es kann vorgesehen sein, dass die Kransteuerung zur Erzeugung der Sensordaten aus den Sensorsignalen mit einer Cloud-Computing-Recheneinheit verbunden oder verbindbar ist. So können beispielsweise die von der Kransteuerung erfassten Sensorsignale, welche mit der Geometrie, Ausstattung und dem Betriebszustand des Ladekrans korrespondieren, über eine geeignete Telekommunikationseinrichtung an ein Cloud-Service übermittelt werden. Dort können Sensordaten aus den übermittelten Sensorsignalen durch die Cloud-Computing-Recheneinheit erzeugt werden und folglich an die Kransteuerung übermittelt werden.

Es kann vorteilhaft sein, dass die Kransteuerung die Position der Signalisierungsvorrichtung erfasst. Alternativ dazu oder in Kombination damit kann vorgesehen sein, dass die Signalisierungsvorrichtung eine Position des Benutzers und/oder eines Körperteils des Benutzers und/oder eines Sichtfelds des Benutzers (Blickrichtung) relativ zum Ladekran erfasst. Die Erfassung der bzw. einer Position und/oder des Sichtfelds kann beispielsweise über Funkpeilung, ein GPS-System oder mittels einer optischen Erfassungseinrichtung, wie etwa einer Kamera, der Signalisierungsvorrichtung erfolgen.

Die erfasste(n) Position(en) bzw. das erfasste Sichtfeld werden als Datensignale, welche beispielsweise von einem Prozessor erzeugt werden können, mittels einer Übermittlungsvorrichtung an die Eingabevorrichtung übermittelt und die Eingabevorrichtung gibt die übermittelten Datensignale über die zweite und erste Telekommunikationsvorrichtung an die Kransteuerung ab. Die Kransteuerung ist dazu ausgebildet, von einem Benutzer abgegebene Steuerbefehle in Abhängigkeit der erfassten Position der Signalisierungsvorrichtung und/oder des Benutzers und/oder des Körperteils des Benutzers und/oder des Sichtfelds des Benutzers relativ zum Ladekran auszuführen. Die Erfassung der bzw. einer Position und/oder des Sichtfelds kann beispielsweise über Funkpeilung, ein GPS-System oder mittels einer optischen Erfassungseinrichtung, wie etwa einer Kamera, der Signalisierungsvorrichtung erfolgen.

Die Abgabe von Steuerbefehlen durch einen Benutzer bzw. das Ausführen von Steuerbefehlen durch die Kransteuerung kann also in Abhängigkeit der erfassten Position der Signalisierungsvorrichtung und/oder des Benutzers und/oder des Körperteils des Benutzers und/oder des Sichtfelds des Benutzers relativ zum Ladekran erlaubt oder unterbunden werden. Auch ist es möglich, Steuerbefehle in Abhängigkeit der erfassten Position der Signalisierungsvorrichtung und/oder des Benutzers und/oder des Körperteils des Benutzers und/oder des Sichtfelds des Benutzers zu generieren. So kann beispielsweise durch die Erfassung der Position(en) eine sogenannte Gestensteuerung realisiert werden.

Es ist weiter möglich, Audiodaten und/oder Bilddaten in Abhängigkeit der erfassten Position(en) angezeigt werden.

Wie eingangs bereits erwähnt, wird auch Schutz für einen Ladekran mit einer wie zuvor beschriebenen Bedienvorrichtung begehrt.

Ausführungsbeispiele der Erfindung werden anhand der Figuren diskutiert. Es zeigen:
- Fig. 1: eine Ausführung eines Ladekrans mit einer Bedienvorrichtung,
- Fig. 2a bis 2c: verschiedene Ausführungen der Bedienvorrichtung,
- Fig. 3: ein Fahrzeug mit einem Ladekran und einer Bedienvorrichtung, und
- Fig. 4: ein Fahrzeug mit einem Ladekran und einer Bedienvorrichtung und einen Benutzer.

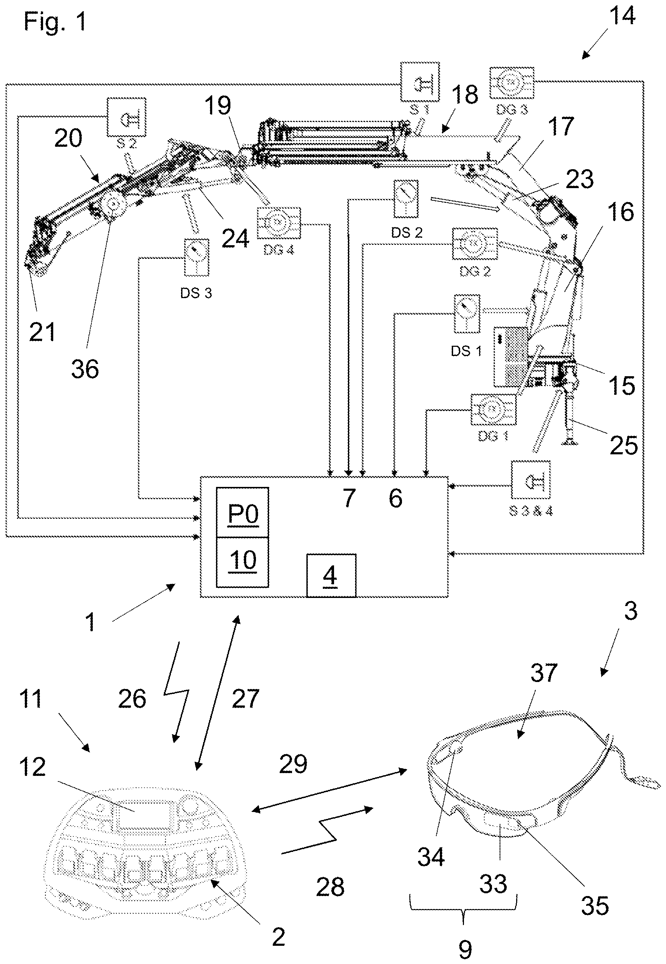

Figur 1 zeigt eine Ausführung eines Ladekrans 14 mit einer Bedienvorrichtung in Form einer Kransteuerung 1, einer Eingabevorrichtung 2 und einer Signalisierungsvorrichtung 3. In der gezeigten Ausführung ist die Eingabevorrichtung 2 an einem mobilen Bedienpult 11 angeordnet und die Signalisierungsvorrichtung 3 ist als Datenbrille 37 ausgebildet. Zur Erfassung eines Sichtfelds der Signalisierungsvorrichtung 3 weist diese in der in Figur 1 gezeigten Ausführung eine optische Erfassungseinrichtung 33, wie beispielsweise eine Kamera, auf.

Der Ladekran 14 ist mit dessen Kransockel 15 beispielsweise an einem Fahrzeug montierbar. Am Kransockel 15 ist eine um eine vertikale Achse drehbare Kransäule 16 gelagert. An der Kransäule 16 ist ein um eine horizontale Achse mittels eines Aktuators in Form eines Hydraulikzylinders 22 verschwenkbarer Hubarm 17 angeordnet. Am Hubarm 17 ist wiederum eine um eine horizontale Achse mittels eines weiteren Aktuators in Form eines Hydraulikzylinders 23 verschwenkbare Kranarmverlängerung 18 mit zumindest einem teleskopierbaren Kranschubarm 19 angeordnet. Wie in der Ausführung in Fig. 1 gezeigt, kann an der Kranarmverlängerung 18 ein Vorsatzarm 20, der ebenfalls mittels eines weiteren Aktuators in Form eines Hydraulikzylinders 24 um eine horizontale Achse verschwenkbar ist, angeordnet sein. Ebenso kann der Vorsatzarm 20 zumindest einen teleskopierbaren Kranschubarm 21 aufweisen. Zur zusätzlichen Abstützung des Ladekrans 14 bzw. eines dem Ladekran 14 tragenden Fahrzeugs ist eine Abstützvorrichtung mit Auslegern vorgesehen, von welchen in der in Figur 1 gezeigten Ansicht ein Ausleger 25 gezeigt ist und welche ausfahrbare, teleskopierbare Stützbeine aufweisen können. Am Vorsatzarm 20 des Ladekrans 14 ist zudem ein Arbeitsgerät 36 in Form einer Winde angeordnet.

Der Ladekran 14 weist neben den zuvor genannten Komponenten diverse Sensoren zur Erfassung der momentanen Stellung bzw. Geometrie des Ladekrans 14 auf. Für den Ausleger 25 sind Schalter S3, S4 zur Erfassung des Abstützzustands des Auslegers am Boden vorgesehen. Auch ist denkbar, dass die Ausfahrstellung des Auslegers 25 über eine hier nicht gezeigte Wegmesseinrichtung erfasst wird. Zur Erfassung des Drehwinkels der Kransäule 16 relativ zum Kransockel 15 ist ein Drehgeber DG1 vorgesehen. Zur Erfassung des Knickwinkels in einer vertikalen Ebene zwischen der Kransäule 16 und dem Hubarm 17 ist ein weiterer Drehgeber DG2 vorgesehen. Der für die Kranauslastung charakteristische Hydraulikdruck im Hydraulikzylinder 22 des Hubarms 17 ist ein Drucksensor DS1 vorgesehen. Zur Erfassung des Knickwinkels zwischen dem Hubarm 17 und der Kranarmverlängerung 18 in einer vertikalen Ebene ist ein Drehgeber DG3 vorgesehen. Zur Erfassung des Hydraulikdrucks im Hydraulikzylinder 23 der Kranarmverlängerung 18 ist ein Drucksensor DS2 vorgesehen. Zur Erfassung des Einfahrzustands eines Kranschubarms 19 der Kranarmverlängerung 18 ist ein Schalter S1 vorgesehen. Weiter ist zur Erfassung des Knickwinkels zwischen der Kranarmverlängerung 18 und dem Vorsatzarm 20 in einer vertikalen Ebene ein Drehgeber DG4 vorgesehen. Zur Erfassung des Hydraulikdrucks des Hydraulikzylinders 24 des Vorsatzarms 20 ist ein Drucksensor DS3 vorgesehen. Zur Erfassung des Einfahrzustands eines Kranschubarms 21 des Vorsatzarms 20 ist ein Schalter S2 vorgesehen. Grundsätzlich soll nicht ausgeschlossen sein, dass die Schubstellung der einzelnen Kranschubarme über einen Schubstellungssensor mit beispielsweise einer Wegmesseinrichtung erfasst wird.

Die Sensorsignale werden der Kransteuerung 1 jeweils über Signaleingänge zugeführt, von denen exemplarisch die Signaleingänge 6, 7 für die Sensorsignale der Drucksensoren DS1, DS2 gezeigt sind. In der Kransteuerung 1 werden dann aus diesen Sensorsignalen und aus in einem Speicher 10 hinterlegten, in diesem Beispiel für den Ladekran 14 spezifischen Daten, durch einen Prozessor P der Kransteuerung 1 Sensordaten berechnet, die für die aktuelle Hublastsituation bzw. den Betriebszustand des Ladekrans 14 charakteristisch sind. Die für den Ladekran 14 spezifischen Daten können beispielsweise Informationen zu Ausstattung, Funktionen und Grenzwerten von Betriebsparametern des Ladekrans 14 und etwaigen Arbeitsgeräten umfassen. So können beispielsweise aus den von den Drucksensoren DS1, DS2 ausgegebenen elektrischen Signalen bzw. Spannungen Sensordaten, welche einem gemessenen Druck in den entsprechenden Hydraulikzylindern 22, 23 entsprechen, berechnet werden. Es kann auch vorgesehen sein, dass die Kransteuerung 1 zur Erzeugung der Sensordaten aus den Sensorsignalen mit einer Cloud-Computing-Recheneinheit verbunden oder verbindbar ist. So können beispielsweise die von der Kransteuerung 1 erfassten Sensorsignale eine geeignete Telekommunikationseinrichtung an ein Cloud-Service übermittelt werden. Dort können Sensordaten aus den übermittelten Sensorsignalen durch die Cloud-Computing-Recheneinheit erzeugt werden und folglich an die Kransteuerung 1 übermittelt werden. Es kann auch möglich sein, für den Ladekran 14 spezifischen Daten an ein Cloud-Service zu übertragen bzw. diese von einem Cloud-Service abzurufen.

Die Kransteuerung 1 ist zur Ansteuerung der Aktuatoren des Ladekrans 14 ausgebildet. Über die Eingabevorrichtung 2 können Steuerbefehlen für die Kransteuerung abgegeben werden. Die Eingabevorrichtung 2 von der Kransteuerung 1 räumlich getrennt ausgebildet, und ist in dem gezeigten Ausführungsbeispiel in einem mobilen Bedienpult 11 angeordnet.

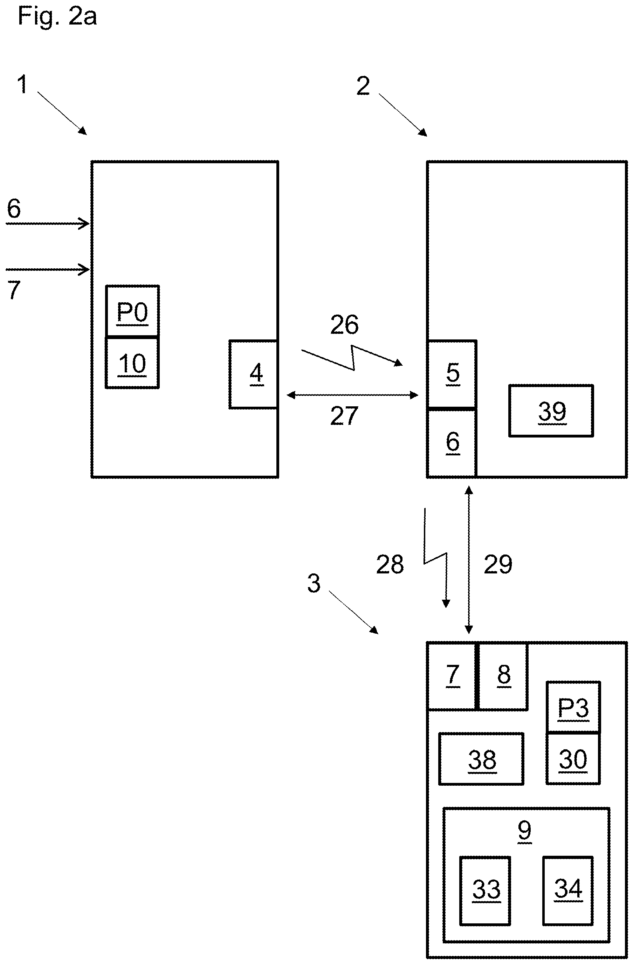

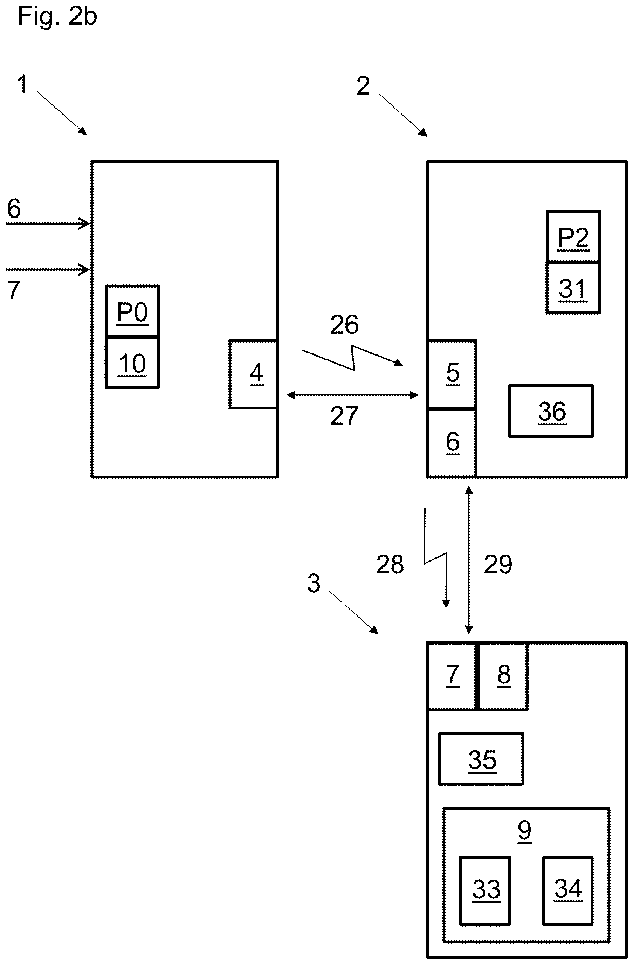

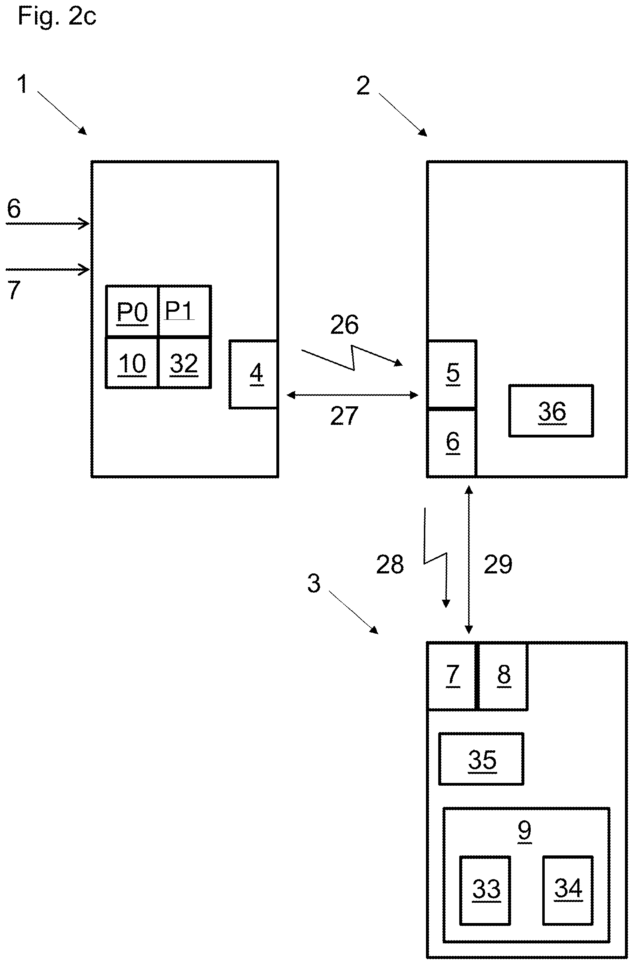

Wie auch aus einem Vergleich mit den Figuren den Figuren 2a, 2b und 2c, welche jeweils schematisch unterschiedliche Ausführungen der Bedienvorrichtung zeigen, weist die Kransteuerung weist jeweils eine erste Telekommunikationsvorrichtung 4 zum Austausch von Datensignalen mit der Eingabevorrichtung 2 bzw. dem Bedienpult 11 auf, wobei vorgesehen ist, dass die von der Kransteuerung 1 abgegebenen Datensignale die Sensordaten umfassen. Analog dazu weist die Eingabevorrichtung 2 jeweils eine zweite Telekommunikationsvorrichtung 5 zum Austausch von Datensignalen mit der ersten Telekommunikationsvorrichtung 4 auf, wobei vorgesehen ist, dass die von der Eingabevorrichtung 2 abgegebenen Datensignale Steuerbefehle umfassen.

Die Bedienvorrichtung weist weiter jeweils eine von einem Benutzer (41) am Körper tragbare Signalisierungsvorrichtung 3 auf. Es ist vorgesehen, dass die Eingabevorrichtung 2 jeweils eine Sendevorrichtung 6 zur Abgabe von Datensignalen aufweist, wobei die Datensignale von einer Empfangsvorrichtung 7 der Signalisierungsvorrichtung 3 empfangen werden können. Weiter ist vorgesehen, dass die von einem Benutzer (41) am Körper tragbare Signalisierungsvorrichtung 3 eine Anzeigevorrichtung 9 aufweist, durch welche einem Benutzer (41) Audiodaten und/oder Bilddaten anzeigbar sind. Die Anzeigevorrichtung 9 kann dabei eine wie zuvor diskutierte optische Anzeige 33 sowie eine wie zuvor diskutierte akustische Anzeige 34 umfassen. Die Signalisierungsvorrichtung 3 kann allgemein einen Prozessor aufweisen, welcher beispielsweise dazu ausgebildet ist, die Anzeigevorrichtung 9 entsprechend zur Signalisierung bzw. Wiedergabe der Audiodaten und/oder Bilddaten anzusteuern. Auch das Bedienpult 11 kann eine Anzeige 12 (und einen entsprechend zur Anzeige ausgebildeten Prozessor) aufweisen, welche beispielsweise der Anzeige von Datensignalen, wie etwa Sensorsignalen, dienen kann. Es kann vorgesehen sein, dass die Sendevorrichtung 6 der Eingabevorrichtung 2 durch die zweite Telekommunikationsvorrichtung 5 gebildet wird.

Die Eingabevorrichtung 2 und die Signalisierungsvorrichtung 3 können jeweils einen Energiespeicher 38, 39 aufweisen. Die Energieversorgung der Signalisierungsvorrichtung 3 kann jedoch auch über die Eingabevorrichtung 2, wie etwa deren Energiespeicher 38 und eine entsprechende Verbindung, erfolgen.

Die Signalisierungsvorrichtung 3 kann eine Übermittlungsvorrichtung 8 aufweisen, mittels welcher eine erfasste Position bzw. ein erfasstes Sichtfeld des Signalisierungsvorrichtung 3 als Datensignale, welche beispielsweise von einem Prozessor des Signalisierungsvorrichtung 3 erzeugt werden können, an die Eingabevorrichtung 2 übermittelt werden können.

In Figur 2a ist eine erste Ausführung der Bedienvorrichtung gezeigt. In dieser Ausführung werden von der Kransteuerung 1 an die Eingabevorrichtung 2 mittels einer durch die erste Telekommunikationsvorrichtung 4 und die zweite Telekommunikationsvorrichtung 5 gestützte Drahtlosverbindung 26 und/oder leitungsgebundene Kabelverbindung 27 Datensignale abgegeben, welche Sensordaten umfassen. Die Eingabevorrichtung 2 gibt diese Sensordaten über eine mittels der Sendevorrichtung 6 und der Empfangsvorrichtung 7 gestützte Drahtlosverbindung 28 und/oder leitungsgebundene Kabelverbindungen 29 an die Signalisierungsvorrichtung 3 ab. Die Signalisierungsvorrichtung 3 weist in dieser Ausführung einen Prozessor P3 auf, welcher nun auf Basis dieser Sensordaten die Audiodaten und/oder Bilddaten, die einem Benutzer (41) signalisiert werden sollen, erzeugt. Selbstverständlich kann für die Signalisierungsvorrichtung 3 ein Speicher 30 zum Speichern berechneter und/oder empfangener Daten vorgesehen sein.

In Figur 2b ist eine zweite Ausführung der Bedienvorrichtung gezeigt. In dieser Ausführung weist die Eingabevorrichtung 2 einen Prozessor P2 auf, welcher auf Basis der von der Kransteuerung 1 an die Eingabevorrichtung 2 abgegebenen Sensordaten die Audiodaten und/oder Bilddaten, welche einem Benutzer (41) angezeigt werden sollen, erzeugt. Es ist infolge vorgesehen, dass die Audiodaten und/oder Bilddaten mittels der Sendevorrichtung 6 an die Empfangsvorrichtung 7 der Signalisierungsvorrichtung 3 abgegeben werden. Selbstverständlich kann für die für die Eingabevorrichtung 2 ein Speicher 31 zum Speichern berechneter und/oder empfangener Daten vorgesehen sein.

In Figur 2c ist eine dritte Ausführung der Bedienvorrichtung gezeigt. In dieser Ausführung weist die Kransteuerung 1 einen Prozessor P1 auf, welcher auf Basis der Sensordaten Audiodaten und/oder Bilddaten erzeugt, und diese mittels der ersten und zweiten Telekommunikationsvorrichtungen 4, 5 an die Eingabevorrichtung 2 abgibt und die Eingabevorrichtung 2 mittels der Sendevorrichtung 6 die Audiodaten und/oder Bilddaten an die Signalisierungsvorrichtung 3 abgibt.

Wie der Ausführung der Kransteuerung 1 in Figur 1 zu entnehmen ist, kann die in Figur 1 gezeigte Ausführung der Bedienvorrichtung jener der Figur 2a oder 2b entsprechen. Bei Vorsehen eines Prozessors P1 (und gegebenenfalls eines Speichers 32) kann die in Figur 1 gezeigte Ausführung der Bedienvorrichtung jedoch auch entsprechend der in Figur 2c gezeigten Ausführung ausgebildet werden.

Allgemein soll nicht ausgeschlossen sein, dass die Prozessoren P1, P2, P3 zur Erzeugung der Audiodaten und/oder Bilddaten als ein eigenständiger Prozessor bzw. ein eigenständiges Bauteil oder als eine datenverarbeitende Logik-Einheit (beispielsweise ein Prozessorkern) eines bestehenden Prozessors ausgebildet sind. Analog dazu können die Speicher 30, 31, 32 eigenständig oder als Teil bestehender Speicher ausgebildet sein.

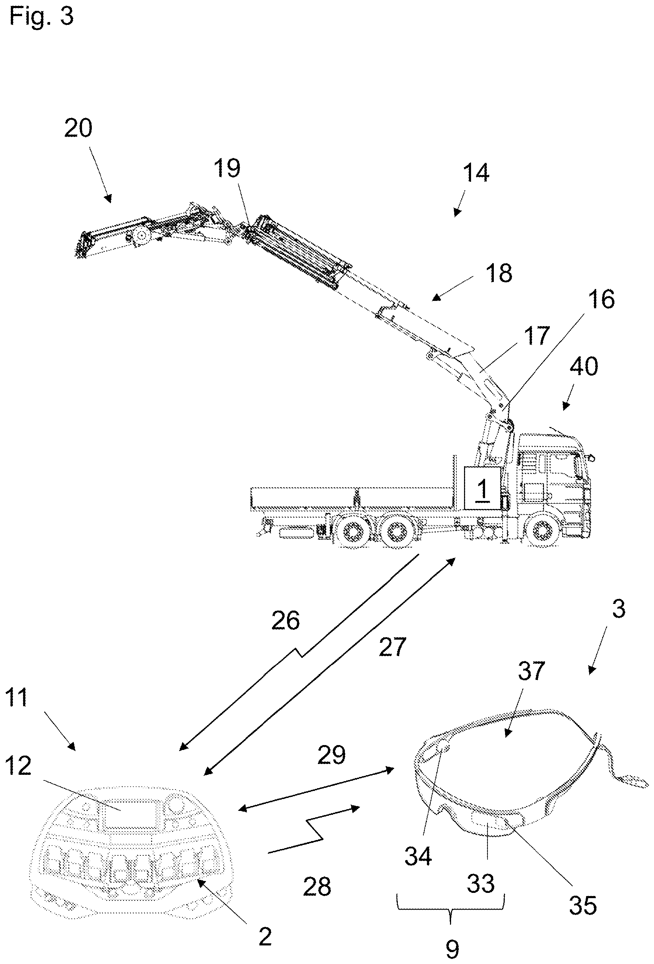

In Figur 3 ist ein Fahrzeug 40 mit einem Ladekran 14 und einer beispielsweise wie in Figur 1 gezeigten Ausführung der Bedienvorrichtung mit einer Eingabevorrichtung 2 und einer Signalisierungsvorrichtung 3 gezeigt.

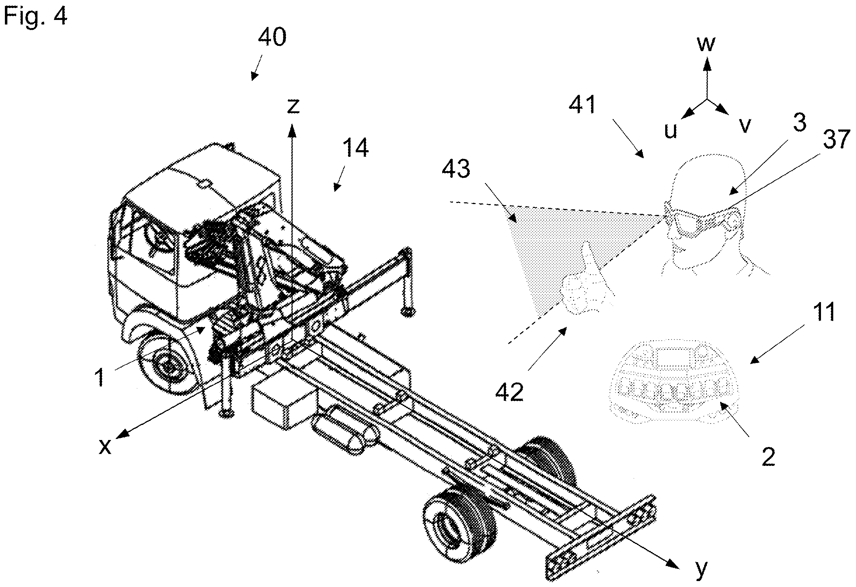

In Figur 4 ist eine weitere Ausführung eines Fahrzeugs 40 mit einem Ladekran 14 und einer wie beispielsweise in Figur 1 gezeigten Ausführung der Bedienvorrichtung mit einer Eingabevorrichtung 2 und einer von einem Benutzer 41 getragenen Signalisierungsvorrichtung 3 in Form einer weiteren Ausführung einer Datenbrille 37 gezeigt. Die Bedienvorrichtung kann dazu ausgebildet sein, dass von der Kransteuerung 1 die Position der Signalisierungsvorrichtung 3 erfasst wird. Im gezeigten Ausführungsbeispiel kann also die Position der Signalisierungsvorrichtung 3 im Koordinatensystem x, y, z des Fahrzeugs 40 bzw. des Ladekrans 14 erfasst werden.

Weiter kann die Signalisierungsvorrichtung 3 eine Position des Benutzers 41 erfassen. Im gezeigten Ausführungsbeispiel kann auch die Orientierung des Koordinatensystems u, v, w der Signalisierungsvorrichtung 3 relativ zum Koordinatensystem x, y, z des Fahrzeugs 40 bzw. des Ladekrans 14 - und somit eine Ausrichtung des Benutzers 41 relativ zum Fahrzeug 40 bzw. zum Ladekran 14 - bestimmt werden.

Es kann weiter die Position eines Körperteils 42 des Benutzers 41 relativ zum Ladekran 14 bzw. relativ zu Signalisierungsvorrichtung 3 erfasst werden. Weiter kann das Sichtfeld 43 des Benutzers 41 relativ zum Ladekran 14 erfasst werden. So kann beispielsweise auch die Position eines Körperteils 42 des Benutzers 41 im Sichtfeld 43 des Benutzers 41 erfasst werden. Dadurch kann sich beispielsweise auch eine Abfolge von Bewegungen eines Körperteils 42 des Benutzers 41 (Gesten) erfassen lassen. Das Sichtfeld 43 des Benutzers kann dabei beispielsweise über eine optische Erfassungseinrichtung (vergleiche Bezugszeichen 35 in Figur 3) erfasst werden.

Die erfassten Positionen können von der Signalisierungsvorrichtung 3 als Datensignale mittels einer Übermittlungsvorrichtung 8 an die Eingabevorrichtung 2 übermittelt werden, und von der Eingabevorrichtung 2 die übermittelten Datensignale über die zweite und erste Telekommunikationsvorrichtung 5, 4 weiter an die Kransteuerung 1 abgegeben werden. Die Kransteuerung 1 kann nun grundsätzlich dazu ausgebildet sein, in Abhängigkeit der erfassten Positionen Steuerbefehle zu generieren und/oder auszuführen. So können Steuerbefehle des Benutzers 41 in Abhängigkeit der erfassten Position der Signalisierungsvorrichtung 3 ausgeführt werden. Weiter können Steuerbefehle in Abhängigkeit der erfassten Position des Benutzers 41, also beispielsweise der erfassten Ausrichtung des Benutzers 41 relativ zum Fahrzeug 40 bzw. zum Ladekran 14, ausgeführt werden. Steuerbefehle können weiter in Abhängigkeit der erfassten Position des Körperteils 42 des Benutzers 41 ausgeführt werden, wobei dies beispielsweise auch das Generieren von Steuerbefehlen durch die erfasste Position des Körperteils 42 des Benutzers 41 (Gestensteuerung) umfassen kann. Weiter können Steuerbefehle in Abhängigkeit des erfassten Sichtfelds 43 des Benutzers 41 relativ zum Ladekran 14 ausgeführt werden. So kann beispielsweise die Ausführung von Steuerbefehlen auch unterbunden werden, wenn durch das erfasste Sichtfeld 43 (oder auch die erfasste Position) des Benutzers 41 davon auszugehen ist, dass dieses bzw. dieser nicht zum Fahrzeug 40 bzw. zum Ladekran 14 oder einem Arbeitsbereich des Ladekrans 14 hin gerichtet ist.

### Bezugszeichenliste:

- 1: Kransteuerung
- 2: Eingabevorrichtung
- 3: Signalisierungsvorrichtung
- 4: erste Telekommunikationsvorrichtung
- 5: zweite Telekommunikationsvorrichtung
- 6: Sendevorrichtung
- 7: Empfangsvorrichtung
- 8: Übermittlungsvorrichtung
- 9: Anzeigevorrichtung
- 10: Speicher
- 11: Bedienpult
- 12: Anzeige
- 14: Ladekran
- 15: Kransockel
- 16: Kransäule
- 17: Hubarm
- 18: Kranarmverlängerung
- 19: Kranschubarm
- 20: Vorsatzarm
- 21: Kranschubarm
- 22, 23, 24: Hydraulikzylinder
- 25: Ausleger
- 26: Drahtlosverbindung
- 27: Kabelverbindung
- 28: Drahtlosverbindung
- 29: Kabelverbindung
- 30: Speicher
- 31: Speicher
- 32: Speicher
- 33: optische Anzeige
- 34: akustische Anzeige
- 35: optische Erfassungseinrichtung
- 36: Arbeitsgerät
- 37: Datenbrille
- 38, 39: Energiespeicher
- 40: Fahrzeug
- 41: Benutzer
- 42: Körperteil
- 43: Sichtfeld
- x, y, z: Koordinatensystem Kran
- u, v, w: Koordinatensystem Signalisierungsvorrichtung
- P0: Prozessor
- P1, P2, P3: Prozessor
- S1, S2, S3, S4: Schalter
- DG1, DG2, DG3, DG4: Drehgeber
- DS1, DS2. DS3: Drucksensor

## Patentansprüche

1. Bedienvorrichtung für einen Ladekran (14), mit:
- einer Kransteuerung (1) zur Ansteuerung von Aktuatoren des Ladekrans (14) basierend auf Steuerbefehlen und zum Auswerten von Sensorsignalen von Sensoren des Ladekrans (14) und zur Erzeugung von Sensordaten auf Basis der Sensorsignale,
- einer von der Kransteuerung (1) räumlich getrennten Eingabevorrichtung (2) zur Eingabe von Steuerbefehlen für die Kransteuerung (1),
wobei
- die Kransteuerung (1) eine erste Telekommunikationsvorrichtung (4) zum Austausch von Datensignalen mit der Eingabevorrichtung (2) aufweist, wobei die von der Kransteuerung (1) abgegebenen Datensignale Sensordaten umfassen,
- die Eingabevorrichtung (2) eine zweite Telekommunikationsvorrichtung (5) zum Austausch von Datensignalen mit der ersten Telekommunikationsvorrichtung (4) aufweist, wobei die von der Eingabevorrichtung (2) abgegebenen Datensignale Steuerbefehle umfassen,
- die Eingabevorrichtung (2) eine Sendevorrichtung (6) zur Abgabe von Datensignalen aufweist,
- eine von der Eingabevorrichtung (2) räumlich getrennte, von einem Benutzer (41) am Körper tragbare Signalisierungsvorrichtung (3) vorgesehen ist, welche eine Empfangsvorrichtung (7) zum Empfang von von der Sendevorrichtung (6) abgegebenen Datensignalen und eine Anzeigevorrichtung (9) aufweist, durch welche Audiodaten und/oder Bilddaten anzeigbar sind, wobei die Signalisierungsvorrichtung (3) die Audiodaten und/oder Bilddaten einem Benutzer (41) signalisiert,
**dadurch gekennzeichnet, dass** entweder
- von der Kransteuerung (1) abgegebene Datensignale Sensordaten umfassen und die Eingabevorrichtung (2) mittels der Sendevorrichtung (6) diese Sensordaten an die Signalisierungsvorrichtung (3) abgibt und die Signalisierungsvorrichtung (3) einen Prozessor (P3) aufweist, welcher auf Basis dieser Sensordaten die Audiodaten und/oder Bilddaten erzeugt, oder
- die Eingabevorrichtung (2) einen Prozessor (P2) aufweist, welcher auf Basis der von der Kransteuerung (1) abgegebenen Sensordaten die Audiodaten und/oder Bilddaten erzeugt und diese mittels der Sendevorrichtung (6) an die Signalisierungsvorrichtung (3) abgibt, oder
- die Kransteuerung (1) einen Prozessor (P1) aufweist, welcher auf Basis der Sensordaten Audiodaten und/oder Bilddaten erzeugt und mittels der ersten und zweiten Telekommunikationsvorrichtungen (4, 5) an die Eingabevorrichtung (2) abgibt und die Eingabevorrichtung (2) mittels der Sendevorrichtung (6) die Audiodaten und/oder Bilddaten an die Signalisierungsvorrichtung (3) abgibt.

2. Bedienvorrichtung nach Anspruch 1, wobei die erste und die zweite Telekommunikationsvorrichtung (4, 5) als drahtlose Telekommunikationsvorrichtungen, vorzugsweise als Kurzwellen-Telekommunikationsvorrichtungen, besonders bevorzugt als ISM-Telekommunikationsvorrichtungen, WIFI-Telekommunikationsvorrichtungen oder als Bluetooth^{(R)}-Telekommunikationsvorrichtungen, ausgebildet sind.

3. Bedienvorrichtung nach wenigstens einem der vorangehenden Ansprüche, wobei die Sendevorrichtung (6) und die Empfangsvorrichtung (7) als drahtlose Telekommunikationsvorrichtungen oder als kabelgebundene Telekommunikationsvorrichtungen ausgebildet sind.

4. Bedienvorrichtung nach wenigstens einem der vorangehenden Ansprüche, wobei die Eingabevorrichtung (2) in einem mobilen Bedienpult (11) oder in einem Bedienstand angeordnet ist.

5. Bedienvorrichtung nach wenigstens einem der vorangehenden Ansprüche, wobei die Signalisierungsvorrichtung (3) als Datenbrille (37), Smartwatch, Smartphone, Tablet, Headset oder Ohrknopf ausgebildet ist.

6. Bedienvorrichtung nach wenigstens einem der vorangehenden Ansprüche, wobei Sensordaten und Steuerbefehle über unterschiedliche Kommunikationskanäle oder über denselben Kommunikationskanal übermittelt werden.

7. Bedienvorrichtung nach wenigstens einem der vorangehenden Ansprüche, wobei die Sendevorrichtung (6) durch die zweite Telekommunikationsvorrichtung (5) gebildet wird.

8. Bedienvorrichtung nach wenigstens einem der vorangehenden Ansprüche, wobei die Eingabevorrichtung (2) einen Energiespeicher (38) zur Energieversorgung der Signalisierungsvorrichtung (3) aufweist.

9. Bedienvorrichtung nach wenigstens einem der vorangehenden Ansprüche, wobei die Kransteuerung (1) zur Erzeugung der Sensordaten aus den Sensorsignalen mit einer Cloud-Computing-Recheneinheit verbunden oder verbindbar ist.

10. Bedienvorrichtung nach wenigstens einem der vorangehenden Ansprüche, wobei die Signalisierungsvorrichtung (3) die Bilddaten zumindest einem Teil eines Sichtfelds (43) des Benutzers (41) überlagert oder zumindest einen Teil eines Sichtfelds (43) des Benutzers (41) mit den Bilddaten ausfüllt.

11. Bedienvorrichtung nach dem vorangehenden Anspruch, wobei die Signalisierungsvorrichtung (3) die visualisierten Bilddaten nur einem Teil des Sichtfelds (43) des Benutzers (41) überlagert oder nur einen Teil des Sichtfelds (43) des Benutzers (41) mit den Bilddaten ausfüllt.

12. Bedienvorrichtung nach wenigstens einem der vorangehenden Ansprüche, wobei entweder
- die Kransteuerung (1) die Position der Signalisierungsvorrichtung (3) erfasst und/oder
- die Signalisierungsvorrichtung (3) eine Position des Benutzers (41) und/oder eines Körperteils (42) des Benutzers (41) und/oder eines Sichtfelds (43) des Benutzers (41) relativ zum Ladekran (14) erfasst und als Datensignale mittels einer Übermittlungsvorrichtung (8) an die Eingabevorrichtung (2) übermittelt und die Eingabevorrichtung (2) die übermittelten Datensignale über die zweite und erste Telekommunikationsvorrichtung (5, 4) an die Kransteuerung (1) abgibt und die Kransteuerung (1) dazu ausgebildet ist, Steuerbefehle des Benutzers (41) in Abhängigkeit der erfassten Position
- der Signalisierungsvorrichtung (3) und/oder
- des Benutzers (41) und/oder des Körperteils (42) des Benutzers (41) und/oder des Sichtfelds (43) des Benutzers (41) relativ zum Ladekran (14)
auszuführen.

13. Ladekran (14) mit einer Bedienvorrichtung nach wenigstens einem der vorangehenden Ansprüche.

14. Fahrzeug (40) mit einem Ladekran (14) nach Anspruch 13.

## Claims

1. An operating device for a loading crane (14) comprising:
- a crane control means (1) for controlling actuators of the loading crane (14) based on control commands and for evaluating sensor signals from sensors of the loading crane (14) and for generating sensor data on the basis of the sensor signals,
- an input device (2) which is spatially separate from the crane control means (1) for the input of control commands for the crane control means (1),
wherein
- the crane control means (1) has a first telecommunication device (4) for exchange of data signals with the input device (2), wherein the data signals delivered by the crane control means (1) include sensor data,
- the input device (2) has a second telecommunication device (5) for exchange of data signals with the first telecommunication device (4), wherein the data signals delivered by the input device (2) include control commands,
- the input device (2) has a transmitting device (6) for the delivery of data signals,
- there is provided a signalling device (3) which is spatially separate from the input device (2) and which can be worn by a user (41) on the body and which has a receiving device (7) for receiving data signals delivered by the transmitting device (6) and a displaying device (9) by which audio data and/or image data can be displayed, wherein the signalling device (3) signals the audio data and/or image data to a user (41),
**characterised in that** either
- data signals delivered by the crane control means (1) include sensor data and the input device (2) outputs said sensor data to the signalling device (3) by means of the transmitting device (6) and the signalling device (3) has a processor (P3) which generates the audio data and/or image data on the basis of said sensor data, or
- the input device (2) has a processor (P2) which generates the audio data and/or image data on the basis of the sensor data delivered by the crane control means (1) and delivers same by means of the transmitting device (6) to the signalling device (3), or
- the crane control means (1) has a processor (P1) which generates audio data and/or image data on the basis of the sensor data and outputs same by means of the first and second telecommunication devices (4, 5) to the input device (2) and the input device (2) delivers the audio data and/or image data to the signalling device (3) by means of the transmitting device (6).

2. An operating device according to claim 1 wherein the first and second telecommunication devices (4, 5) are in the form of wireless telecommunication devices, preferably short-wave telecommunication devices, particularly preferably ISM telecommunication devices, wifi telecommunication devices or Bluetooth^{®} telecommunication devices.

3. An operating device according to at least one of the preceding claims wherein the transmitting device (6) and the receiving device (7) are in the form of wireless communication devices or wired telecommunication devices.

4. An operating device according to one of the preceding claims wherein the input device (2) is arranged in a mobile operating console (11) or in an operating station.

5. An operating device according to at least one of the preceding claims wherein the signalling device (3) is in the form of data goggles (37), a smartwatch, a smartphone, a tablet, a headset or ear buds.

6. An operating device according to at least one of the preceding claims wherein sensor data and control commands are communicated by way of different communication channels or by way of the same communication channel.

7. An operating device according to at least one of the preceding claims wherein the transmitting device (6) is formed by the second telecommunication device (5).

8. An operating device according to at least one of the preceding claims wherein the input device (2) has a power storage means (38) for the power supply of the signalling device (3).

9. An operating device according to at least one of the preceding claims wherein the crane control means (1) is or can be connected to a cloud computing computer unit for generating the sensor data from the sensor signals.

10. An operating device according to at least one of the preceding claims wherein the signalling device (3) superimposes the image data at least on a part of a visual field (43) of the user (41) or fills at least a part of a visual field (43) of the user (41) with the image data.

11. An operating device according to the preceding claim wherein the signalling device (3) superimposes the visualised image data only on a part of the visual field (43) of the user (41) or fills only a part of the visual field (43) of the user (41) with the image data.

12. An operating device according to at least one of the preceding claims wherein either
- the crane control means (1) detects the position of the signalling device (3), and/or
- the signalling device (3) detects a position of the user (41) and/or a part of the body (42) of the user (41) and/or a visual field (43) of the user (41) relative to the loading crane (14) and communicates same as data signals to the input device (2) by way of a communication device (8) and the input device (2) delivers the communicated data signals to the crane control means (1) by way of the second and first telecommunication devices (5, 4),
and the crane control means (1) is adapted to carry out control commands of the user (41) in dependence on the detected position:
- of the signalling device (3), and/or
- of the user (41) and/or the part of the body (42) of the user (41) and/or the visual field (43) of the user (41) relative to the loading crane (14).

13. A loading crane (14) having an operating device according to at least one of the preceding claims.

14. A vehicle (40) having a loading crane (14) according to claim 13.

## Revendications

1. Dispositif de commande utilisateur pour une grue de chargement (14), avec :
- une commande de grue (1) destinée à piloter des actionneurs de la grue de chargement (14) sur la base d'instructions de commande et destinée à évaluer des signaux de capteur de capteurs de la grue de chargement (14) et destinée à générer des données de capteur sur la base des signaux de capteur,
- un dispositif d'entrée (2) séparé spatialement de la commande de grue (1), destiné à entrer des instructions de commande pour la commande de grue (1),
dans lequel
- la commande de grue (1) présente un premier dispositif de télécommunication (4) destiné à échanger des signaux de données avec le dispositif d'entrée (2), dans lequel les signaux de données envoyés par la commande de grue (1) comprennent des données de capteur,
- le dispositif d'entrée (2) présente un deuxième dispositif de télécommunication (5) destiné à échanger des signaux de données avec le premier dispositif de télécommunication (4), dans lequel les signaux de données envoyés par le dispositif d'entrée (2) comprennent des instructions de commande,
- le dispositif d'entrée (2) présente un dispositif d'émission (6) destiné à envoyer des signaux de données,
- un dispositif de signalisation (3) séparé spatialement du dispositif d'entrée (2), pouvant être porté sur le corps par un utilisateur (41) est prévu, lequel présente un dispositif de réception (7) destiné à recevoir des signaux de données envoyés par le dispositif d'émission (6) et un dispositif d'affichage (9), par lequel des données audio et/ou des données d'image peuvent être affichées, dans lequel le dispositif de signalisation (3) signale les données audio et/ou les données d'image à un utilisateur (41),
**caractérisé en ce que** soit
- des signaux de données envoyés par la commande de grue (1) comprennent des données de capteur et le dispositif d'entrée (2) envoie ces données de capteur au dispositif de signalisation (3) au moyen du dispositif d'émission (6) et le dispositif de signalisation (3) présente un processeur (P3), lequel génère sur la base desdites données de capteur les données audio et/ou les données d'image, soit
- le dispositif d'entrée (2) présente un processeur (P2), lequel génère sur la base des données de capteur envoyées par la commande de grue (1) les données audio et/ou les données d'image et envoie celles-ci au dispositif de signalisation (3) au moyen du dispositif d'émission (6), soit
- la commande de grue (1) présente un processeur (P1), lequel génère sur la base des données de capteur des données audio et/ou des données d'image et les envoie au dispositif d'entrée (2) au moyen des premier et deuxième dispositifs de télécommunication (4, 5) et le dispositif d'entrée (2) envoie les données audio et/ou les données d'image au dispositif de signalisation (3) au moyen du dispositif d'émission (6).

2. Dispositif de commande utilisateur selon la revendication 1, dans lequel le premier et le deuxième dispositif de télécommunication (4, 5) sont réalisés en tant que dispositifs de télécommunication sans fil, de préférence en tant que dispositifs de télécommunication à ondes courtes, de manière particulièrement préférée en tant que dispositifs de télécommunication ISM, en tant que dispositifs de télécommunication WIFI ou en tant que dispositifs de télécommunication Bluetooth^{®}.

3. Dispositif de commande utilisateur selon l'une quelconque des revendications précédentes, dans lequel le dispositif d'émission (6) et le dispositif de réception (7) sont réalisés en tant que dispositifs de télécommunication sans fil ou en tant que dispositifs de télécommunication filaires.

4. Dispositif de commande utilisateur selon au moins l'une quelconque des revendications précédentes, dans lequel le dispositif d'entrée (2) est disposé dans un pupitre de commande utilisateur mobile (11) ou dans un poste de commande utilisateur.

5. Dispositif de commande utilisateur selon au moins l'une quelconque des revendications précédentes, dans lequel le dispositif de signalisation (3) est réalisé en tant que lunette de données (37), en tant que montre intelligente, en tant que téléphone intelligent, en tant que tablette, en tant qu'écouteurs ou oreillette.

6. Dispositif de commande utilisateur selon au moins l'une quelconque des revendications précédentes, dans lequel des données de capteur et des instructions de commande sont transférées par l'intermédiaire de différents canaux de communication ou par l'intermédiaire du même canal de communication.

7. Dispositif de commande utilisateur selon au moins l'une quelconque des revendications précédentes, dans lequel le dispositif d'émission (6) est formé par le deuxième dispositif de télécommunication (5).

8. Dispositif de commande utilisateur selon au moins l'une quelconque des revendications précédentes, dans lequel le dispositif d'entrée (2) présente un accumulateur d'énergie (38) destiné à l'alimentation en énergie du dispositif de signalisation (3).

9. Dispositif de commande utilisateur selon au moins l'une quelconque des revendications précédentes, dans lequel la commande de grue (1) est reliée ou peut être reliée à une unité de calcul informatique en nuage pour générer les données de capteur à partir des signaux de capteur.

10. Dispositif de commande utilisateur selon au moins l'une quelconque des revendications précédentes, dans lequel le dispositif de signalisation (3) superposer les données d'image au moins à une partie d'un champ de vision (43) de l'utilisateur (41) et remplit au moins une partie d'un champ de vision (43) de l'utilisateur (41) avec les données d'image.

11. Dispositif de commande utilisateur selon la revendication précédente, dans lequel le dispositif de signalisation (3) superpose les données d'image visualisées seulement à une partie du champ de vision (43) de l'utilisateur (41) ou remplit seulement une partie du champ de vision (43) de l'utilisateur (41) avec les données d'image.

12. Dispositif de commande utilisateur selon au moins l'une quelconque des revendications précédentes, dans lequel soit
- la commande de grue (1) détecte la position du dispositif de signalisation (3) et/ou
- le dispositif de signalisation (3) détecte une position de l'utilisateur (41) et/ou d'une partie corporelle (42) de l'utilisateur (41) et/ou d'un champ de vision (43) de l'utilisateur (41) par rapport à la grue de chargement (14) et les transfère au dispositif d'entrée (2) au moyen d'un dispositif de transfert (8) en tant que signaux de données, et le dispositif d'entrée (2) envoie à la commande de grue (1) les signaux de données transférés par l'intermédiaire du deuxième et du premier dispositif de télécommunication (5, 4),
et la commande de grue (1) est réalisée pour exécuter des instructions de commande de l'utilisateur (41) en fonction de la position détectée
- du dispositif de signalisation (3) et/ou
- de l'utilisateur (41) et/ou de la partie corporelle (42) de l'utilisateur (41) et/ou du champ de vision (43) de l'utilisateur (41) par rapport à la grue de chargement (14).

13. Grue de chargement (14) avec un dispositif de commande utilisateur selon au moins l'une quelconque des revendications précédentes.

14. Véhicule (40) avec une grue de chargement (14) selon la revendication 13.
